**Europäisches Patentamt**

**European Patent Office**

**Office européen des brevets**

(11) Publication number: **0 293 998 B1**

# EUROPEAN PATENT SPECIFICATION

(45) Date of publication of patent specification: **31.08.94**  (51) Int. Cl.⁵: **C01B 33/34**, B01J 29/04, B01J 32/00

(21) Application number: **88201104.2**

(22) Date of filing: **01.06.88**

(54) **Crystalline silicates.**

(30) Priority: **02.06.87 GB 8712880**

(43) Date of publication of application:
**07.12.88 Bulletin 88/49**

(45) Publication of the grant of the patent:
**31.08.94 Bulletin 94/35**

(84) Designated Contracting States:
**BE CH DE FR GB IT LI NL SE**

(56) References cited:
**DE-A- 2 748 278
US-A- 3 941 871
US-A- 4 060 590
US-A- 4 104 294
US-A- 4 241 036**

(73) Proprietor: **SHELL INTERNATIONALE RE-
SEARCH MAATSCHAPPIJ B.V.
Carel van Bylandtlaan 30
NL-2596 HR Den Haag (NL)**

(72) Inventor: **Van den Berg, Johannes Petrus
Badhuisweg 3
NL-1031 CM Amsterdam (NL)**
Inventor: **Post, Martin Franciscus Maria
Badhuisweg 3
NL-1031 CM Amsterdam (NL)**
Inventor: **De Jong-Versloot, Peterina Cornelia
Badhuisweg 3
NL-1031 CM Amsterdam (NL)**
Inventor: **Kortbeek, Andras Guus Theodorus
George
Badhuisweg 3
NL-1031 CM Amsterdam (NL)**

## Description

The present invention relates to novel crystalline silicates and their preparation as well as to novel silicates thus prepared. The present invention also relates to the use of the novel silicates as molecular sieves and as catalyst carriers.

Synthetic crystalline materials are of general interest. Much attention has been and is paid to the synthesis of crystalline aluminosilicates, often referred to as synthetic zeolites since they find wide application in industry as molecular sieves, catalyst carriers as well as catalysts, e.g. in catalytic cracking and hydrocracking. Apart from the almost classical zeolites also crystalline silicates have been reported in the art. Examples of this class of materials comprise silicalite and structures designated as ZSM-11, ZSM-12 and ZSM-39. It has now been found that novel synthetic crystalline silicates can be prepared from crystalline forming solutions when use is made of specific molar ratios of the forming components and using a specific organic nitrogen-containing cation.

United States patent specification n° 4060 590 describes a zeolite NU-1 having a specified as synthesized chemical composition and prepared by a process using a methylated quarternary ammonium compound.

The present invention relates to silicates having in the as-synthesized form the formula:

$$(M_{2/n}O)_p: (TMA_2O)_q:SiO_2:(Al_2O_3)_r : (H_2O)_s$$

wherein M represents an alkali metal or alkaline earth metal of valency n and TMA represents a tetramethylammonium cation and wherein

$$O \leqq p < 0.3; 0.025 < q < 0.4; 0 \leqq r < 0.01 \text{ and } 0 \leqq s < 4.$$

The present invention relates in particular to synthetic crystalline silicates which do not contain alumina in their structure or only to a limited amount, i.e. silicates having a $SiO_2:Al_2O_3$ molar ratio larger than 100, in particular larger than 200.

In particular, the present invention relates to silicates according to the formula as described hereinabove wherein M represents an alkali metal cation and $p < 0.15$; $0.025 < q < 0.35$; $r < 0.01$ and $0.1 < s < 2$. Preference is given to silicates having also a rather low amount of alkaline (earth) metal moieties in the structure, i.e. to silicates wherein $p < 0.1$; $0.04 < q < 0.3$; $r < 0.005$ and $0.3 < s < 1.75$.

An example of a novel synthetic crystalline silicate according to the present invention comprises the structure indicated as SCS-1 having in the as-synthesized form the formula

$$(0.10\text{-}0.20)TMA_2O:SiO_2:(Al_2O_3)_r:(0.5 - 1.5)H_2O$$

wherein $r < 0.005$ and having an X-ray diffraction pattern as given in Table I. A further example comprises the structure indicated as SCS-2 having in the as-synthesized form the formula

$$(0\text{-}0.1)Na_2O:(0.025\text{-}0.20)TMA_2O:SiO_2:(Al_2O_3)_r:(0.1\text{-}1.5)H_2O$$

wherein $r < 0.01$ and having an X-ray diffraction pattern as given in Table II.

The crystalline silicate SCS-2 can be suitably subjected to drying and calcining to remove at least part of the water from the as-synthesized product together with at least part of the tetramethylammonium cation. This can be carried out at temperatures up to around 470 °C whilst maintaining a substantial part of the crystallinity of the product. It is preferred to carry out the calcination at a temperature between 400 and 465 °C.

A further example comprises the structure indicated as SCS-4 having in the as-synthesized form the formula

$$(0\text{-}0.1)Na_2O:(0.05\text{-}0.25)TMA_2O:SiO_2:(Al_2O_3)_r:(0.3\text{-}1.5)H_2O$$

wherein $r < 0.01$ and having an X-ray diffraction pattern as given in Table III.

The present invention also relates to a process for synthesizing silicates of the general formula

$$(M_{2/n}O)_p:(TMA_2O)_q:SiO_2:(Al_2O_3)_r:(H_2O)_s$$

from a forming solution having a molar composition of $a(M_{2/n}O)$ :$bTMA_2O$:$SiO_2$:$cAl_2O_3$:$dH_2O$ wherein M represents an alkali metal or alkaline earth metal of valency n and TMA represents a tetramethylammonium cation and wherein $0 \leq a < 0.5$; $0.05 < b < 10$; $0 \leq c < 0.01$ and $5 < d < 100$ and wherein the $OH^-$/$SiO_2$ molar ratio is at least 0.4, which mixture is kept at elevated temperature for a time sufficient to produce crystalline material followed by separating off the crystalline material produced. The expression $OH^-$ as used herein comprises hydroxyl ions added to the forming solution originating from both tetramethyl anmonium hydroxide and the appropriate metal hydroxide (s). It should he noted that the products obtained may contain alumina. Alumina can be introduced into the structure when use is made of a forming solution containing (optionally) an alkaline (earth) cation, a tetramethylammonium cation, a source of silica, a source of alumina and water within the molar ranges as specified hereinabove.

A preferred process for producing the crystalline silicates, optionally containing small amounts of alumina in their structure comprises using a mixture having the following molar relationship between the various constituents

$0 \leq a < 0.25$; $0.1 < b < 2$; $0 \leq c < 0.005$ and $8 < d < 50$ and wherein the $OH$-/$SiO_2$ molar ratio is between 0.4 and 1.5.

It is also possible to synthesize the crystalline silicates according to the present invention by using one or more compounds of the general formula $R_1R_2O$ wherein $R_1$ and $R_2$ represent a (substituted) hydrocarbyl moiety and one of $R_1$ and $R_2$ may represent a hydrogen atom in the forming solution provided a molar ratio $R_1R_2O$:$SiO_2$ not above 10 is applied. Preferably, when using a compound according to the general formula $R_1R_2O$, a $R_1R_2O$:$SiO_2$ molar ratio at most 2 is applied. Examples of compounds according to the general formula $R_1R_2O$ comprise alcohols such as methanol, ethanol and mixtures thereof, and ethers such as methoxymethane, ethoxyethane as well as mixtures thereof and low molecular weight cyclic ethers.

It should he noted that the alkali and alkaline earth ions as well as the nitrogen containing cations can be added in the form of the hydroxides and/or suitable salts.

The process according to the present invention is normally carried out at temperatures between 75 °C and 250 °C, in particular between 125 °C and 225 °C.

Normally the novel crystalline structures will be produced when the forming solution has been kept under the appropriate conditions for a period of time ranging between 12 and 750 hours allowing for the proper structure to be formed and in reasonable amounts. Preferably the process according to the present invention is carried out for a period of time ranging between 24 and 500 hours.

It has been found that sometimes agitation is advantageously applied to produce the desired synthetic crystalline silicate from the forming solution. The structures SCS-1 and SCS-4 can be suitably produced when the forming mixture is kept for a sufficient period of time at about 150 °C under continuous stirring.

It is possible to subject the crystalline silicates according to the present invention to a metallating procedure in order to increase the amount of the appropriate metal(s) present in or to be incorporated into the system. Preferred metallation procedures comprise the incorporation of aluminium and/or gallium moieties into the crystalline silicates according to the present invention. In particular, the incorporation of aluminium moieties is of interest in order to increase the number of acid sites in the system. The metallation can be carried out by methods known in the art.

The novel compounds according to the present invention can be used as molecular sieves, optionally after (partial) drying and/or calcining, as well as catalyst carriers. In particular alumina-containing crystalline silicates can be used as carriers in the production of catalytically active species, e.g. by incorporating therein one or more metals with catalytic activity.

The invention will now be illustrated by means of the following Examples.

Example 1 - Preparation of SCS-1

364 Grammes of a 25% tetramethylammoniumhydroxide solution (ex Fluka) and 60 grammes of silica (ex Baker, dehydrated at 350 °C) were mixed together to form a mixture having a molar composition 1 tetramethylammonium hydroxide:1 $SiO_2$:15$H_2O$. This mixture was kept under stirring at 150 °C for 72 hours. After cooling, a crystalline compound was obtained having the molar composition 0.16 $TMA_2O$:$SiO_2$:$(Al_2O_3)_r$:0.9$H_2O$ wherein r < 0.01 and having an X-ray diffraction pattern as given in Table I below.

TABLE I

| D spacing (Å) | Intensity |
|---|---|
| 13.8 ± 0.2 | VS |
| 4.8 ± 0.1 | M |
| 3.8 ± 0.1 | M |
| 3.40 ± 0.05 | M |
| 2.70 ± 0.05 | M |

The yield of the compound SCS-1 amounted to 44 %wt (calculated on the amount of $SiO_2$ present in the forming solution). The crystallinity of the product obtained was 100%.

The experiment described hereinabove was repeated with similar starting materials but using a more concentrated tetramethylammonium hydroxide solution giving a $SiO_2:H_2O$ molar ratio of 12.5. The mixture was kept under static conditions for 168 hours at 150 °C without any detectable product being formed. The mixture was held under static conditions for another 168 hours at the same temperature. SCS-1 together with some amorphous material was formed.

The experiment described hereinabove was repeated using tetramethylammonium hydroxide, $SiO_2$ and $H_2O$ in a molar ratio 0.5 tetramethylammonium hydroxide:$SiO_2$:12.5 $H_2O$. Tetramethylammonium chloride was added to give a Cl-/$SiO_2$ ratio of 0.5. This mixture was kept under static conditions at 150 °C for 168 hours to yield SCS-1 together with amorphous material.

Example 2 - Preparation of SCS-2

364 Grammes of a 25 %wt solution of tetramethylammonium hydroxide (ex Fluka) and 60 grammes of silica (ex Baker, dehydrated at 350 °C) were mixed together to form a mixture having a molar composition 1 tetramethylammonium hydroxide:1 $SiO_2$:15 $H_2O$. This mixture was kept under static conditions at 150 °C for a period of 168 hours. After this time a small amount of the novel silicate SCS-2 could be isolated. The mixture was kept under the same conditions for another 168 hours yielding SCS-2 together with amorphous material. The molar composition of the crystalline compound as-synthesized was:
0.05 $TMA_2O:SiO_2:(Al_2O_3)_r:0.6H_2O$ wherein r < 0.01, and it has an X-ray diffraction pattern as given in Table II.

TABLE II

| D spacing (Å) | Intensity |
|---|---|
| 9.0 ± 0.1 | M |
| 8.3 ± 0.1 | M |
| 6.6 ± 0.1 | M |
| 6.3 ± 0.1 | M |
| 4.5 ± 0.1 | M |
| 4.3 ± 0.1 | M |
| 4.2 ± 0.1 | M |
| 4.0 ± 0.1 | VS |

The amount of SCS-2 obtained was 15 %wt.

Another form of the crystalline compound SCS-2 could be prepared as follows:

A clear solution of 45 grammes of tetramethylammonium hydroxide (25% ex Fluka), 15 grammes of silica (ex Baker and dehydrated at 350 °C) and 22 grammes of water were subjected to evaporation to yield a forming solution containing a molar composition 0.25 $TMA_2O:SiO_2:12.5$ $H_2O$. This mixture was kept under static conditions at 150 °C for a period of at least 168 hours, after which the crystalline silicate SCS-2 could be isolated. The molar composition of the silicate as-synthesized was 0.07 $TMA_2O:SiO_2:0.29$ $H_2O$. The SCS-2 compound was obtained in 100% crystallinity.

Example 3 - Preparation of SCS-4

30 Grammes of a clear solution of tetramethylammonium hydroxide and water also containing 0.4 grammes of sodium chloride was prepared to give a forming solution having a molar composition 0.05 $Na_2O$:1 tetramethylammonium hydroxide:$SiO_2$:15 $H_2O$. When this mixture was stirred for 72 hours at 150 °C no product was obtained. When the mixture was kept under the same conditions for a further 96 hours the novel silicate SCS-4 had been formed with 100% crystallinity in a yield of 35 %wt. The molar composition of the compound SCS-4 as-synthesized was 0.07 $Na_2O$:0.1 $TMA_2O$:$SiO_2$:0.6 $H_2O$, and it has an X-ray diffraction pattern as given in Table III.

TABLE III

| D spacing (Å) | Intensity |
|---|---|
| 11.3 ± 0.2 | M |
| 5.7 ± 0.1 | VS |
| 4.2 ± 0.1 | M |
| 3.8 ± 0.1 | S |
| 3.25 ± 0.05 | M |
| 3.10 ± 0.05 | M |
| 2.85 ± 0.05 | M |

**Claims**

1. Silicates with the exception of NU-1 zeolite having in the as-synthesized form the formula:

   $(M_{2/n}O)p$:$(TMA_2O)_q$:$SiO_2$:$(Al_2O_3)_r$:$(H_2O)_s$

   wherein M represents an alkali metal or alkaline earth metal of valency n and TMA represents a tetramethylammonium cation and wherein

   $O \leqq p < 0.3$; $0.025 < q < 0.4$; $0 \leqq r < 0.01$ and $0 \leqq s < 4$.

2. Silicates according to claim 1 wherein M represents an alkali metal cation and $p < 0.15$; $0.025 < q < 0.35$; $r < 0.01$ and $0.1 < s < 2$.

3. Silicates according to claim 2, wherein $p < 0.1$; $0.04 < q < 0.3$; $r < 0.005$ and $0.3 < s < 1.75$.

4. Silicate having in the as-synthesized form, the formula $(0.10 - 0.20)TMA_2O$:$SiO_2$:$(Al_2O_3)_r$:$(0.5-1.5)$ $H_2O$ wherein $r < 0.01$ and having an X-ray diffraction pattern containing at least the lines given hereinbelow:

| D spacing (Å) | Intensity |
|---|---|
| 13.8 ± 0.2 | VS |
| 4.8 ± 0.1 | M |
| 3.8 ± 0.1 | M |
| 3.40 ± 0.05 | M |
| 2.70 ± 0.05 | M |

5. Silicate having in the as-synthesized form the formula $(0-0.1)Na_2O$:$(0.025-0.20)TMA_2O$:$SiO_2$:$(Al_2O_3)_r$:-$(0.1-1.5)H_2O$ wherein $r < 0.01$ and having an X-ray diffraction pattern containing at least the lines as given hereinbelow:

| D spacing (Å) | Intensity |
|---|---|
| 9.0 ± 0.1 | M |
| 8.3 ± 0.1 | M |
| 6.6 ± 0.1 | M |
| 6.3 ± 0.1 | M |
| 4.5 ± 0.1 | M |
| 4.3 ± 0.1 | M |
| 4.2 ± 0.1 | M |
| 4.0 ± 0.1 | VS |

6. Silicate having in the as-synthesized form the formula $(0-0.1)Na_2O:(0.05-0.25)TMA_2O:SiO_2:(Al_2O_3)_r:(0.3-1.5)H_2O$ wherein $r < 0.01$ and having an X-ray pattern containing at least the lines as given hereinbelow:

| D spacing (Å) | Intensity |
|---|---|
| 11.3 ± 0.2 | M |
| 5.7 ± 0.1 | VS |
| 4.2 ± 0.1 | M |
| 3.8 ± 0.1 | S |
| 3.25 ± 0.05 | M |
| 3.10 ± 0.05 | M |
| 2.85 ± 0.05 | M |

7. Process for synthesizing silicates of the general formula according to claim 1 from a forming solution comprising a mixture having the molar composition $a (M_{2/n}O):bTMA_2O:SiO_2:cAl_2O_3:dH_2O$ wherein $0 \leq a < 0.5$; $0.05 < b < 10$; $0 \leq c < 0.01$ and $5 < d < 100$ and wherein the OH-/$SiO_2$ molar ratio is at least 0.4 which mixture is kept at elevated temperature for a time sufficient to produce crystalline material followed by separating off the crystalline material produced.

8. Process according to claim 7 wherein a mixture having a molar composition wherein $0 \leq a < 0.25$, $0.1 < b < 2$; $0 \leq c < 0.005$ and $3 < d < 50$ and wherein the OH-/$SiO_2$ molar ratio is between 0.4 and 1.5 is kept at elevated temperature for a time sufficient to produce crystalline material followed by separating off the crystalline material produced.

9. Process according to claim 7 or 8 wherein the forming solution also contains one or more compounds of the formula $R_1R_2O$ wherein $R_1$ and $R_2$ represent a (substituted) hydrocarbyl moiety and one of $R_1$ and $R_2$ may represent a hydrogen atom and wherein the molar ratio $R_1R_2O:SiO_2$ is not above 10.

10. Process according to claim 9 wherein use is made of a forming solution having a $R_1R_2O:SiO_2$ ratio of at most 2.

11. Process according to any one of claims 7-10 wherein the temperature is kept between 75 °C and 250 °C, in particular between 125 °C and 225 °C.

12. Process according to any one of claims 7-11 wherein the forming solution is kept for a period between 12 and 750 hours under crystal-forming conditions, in particular between 24 and 500 hours.

13. Process for the preparation of crystalline silicates as defined in claims 4 and 6 according to a process according to one or more of claims 7-10 whilst applying agitation to the forming mixture.

14. Use of silicates according to one or more of claims 1-6, which may have been subjected to a drying and/or calcining treatment, as molecular sieves.

6

EP 0 293 998 B1

**15.** Use of silicates according to one or more of claims 1-6, which may have been subjected to a drying and/or calcining treatment as catalyst carriers.

**Patentansprüche**

**1.** Silikate (mit Ausnahme von Nu-1 Zeolith), die in der wie-synthetisierten Form die Formel

$(M_{2/n}O)_p:(TMA_2O)_q:SiO_2:(Al_2O_3)_r:(H_2O)_s$

haben, in der M ein Alkalimetall oder ein Erdalkalimetall der Wertigkeit n und TMA ein Tetramethylammoniumkation darstellt, und in der

$0 \leqq p < 0,3;\ 0,025 < q < 0,4;\ 0 \leqq r < 0,01$ und $0 \leqq s < 4$

ist.

**2.** Silikate nach Anspruch 1, in denen M ein Alkalimetallkation darstellt und $p < 0,15;\ 0,025 < q < 0,35;\ r < 0,01$ und $0,1 < s < 2$ ist.

**3.** Silikate nach Anspruch 2, in denen $p < 0,1;\ 0,04 < q < 0,3;\ r < 0,005$ und $0,3 < s < 1,75$ ist.

**4.** Silikat, das in der wie-synthetisierten Form die Formel $(0,10 - 0,20)TMA_2O:SiO_2:(Al_2O_3)_r:(0,5-1,5)\ H_2O$ hat, in der $r < 0,01$ ist, und das ein Röntgenbeugungsbild hat, das wenigstens die unten angegebenen Linien enthält:

| D Abstand (Å) | Intensität |
|---|---|
| 13,8 ± 0,2 | VS |
| 4,8 ± 0,1 | M |
| 3,8 ± 0,1 | M |
| 3,40 ± 0,05 | M |
| 2,70 ± 0,05 | M |

**5.** Silikat, das in der wie-synthetisierten Form die Formel $(0-0,1)Na_2O:(0,025-0,20)TMA_2O:SiO_2:(Al_2O_3)_r:(0,1-1,5)H_2O$ hat, in der $r < 0,01$ ist und dessen Röntgenbeugungsbild wenigstens die unten angegebenen Linien enthält:

| D Abstand (Å) | Intensität |
|---|---|
| 9,0 ± 0,1 | M |
| 8,3 ± 0,1 | M |
| 6,6 ± 0,1 | M |
| 6,3 ± 0,1 | M |
| 4,5 ± 0,1 | M |
| 4,3 ± 0,1 | M |
| 4,2 ± 0,1 | M |
| 4,0 ± 0,1 | VS |

**6.** Silikat, das in der wie-synthetisierten Form die Formel $(0-0,1)Na_2O:(0,05-0,25)TMA_2O:SiO_2:(Al_2O_3)_r:(0,3-1,5)H_2O$ hat, in der $r < 0,01$ ist und dessen Röntgenbeugungsbild wenigstens die unten angegebenen Linien enthält:

7

| D Abstand (Å) | Intensität |
|---|---|
| 11,3 ± 0,2 | M |
| 5,7 ± 0,1 | VS |
| 4,2 ± 0,1 | M |
| 3,8 ± 0,1 | S |
| 3,25 ± 0,05 | M |
| 3,10 ± 0,05 | M |
| 2,85 ± 0,05 | M |

7. Verfahren zur Synthetisierung von Silikaten der allgemeinen Formel gemäß Anspruch 1 aus einer Formierungslösung, umfassend ein Gemisch mit der molaren Zusammensetzung $a(M_{2/n}O)$:$bTMA_2O$:$SiO_2$:$cAl_2O_3$:$dH_2O$, in der $0 \leq a < 0,5$; $0,05 < b < 10$; $0 \leq c < 0,01$ und $5 < d < 100$ ist und in der das molare Verhältnis $OH^-/SiO_2$ mindestens 0,4 beträgt, welches Gemisch über einen Zeitraum, der ausreichend ist, um kristallines Material zu erzeugen, auf erhöhter Temperatur gehalten wird, gefolgt vom Abtrennen des erzeugten kristallinen Materials.

8. Verfahren nach Anspruch 7, in dem ein Gemisch mit einer molaren Zusammensetzung, in der
   $0 \leq a < 0,25$; $0,1 < b < 2$; $0 \leq c < 0,005$ und $8 < d < 50$
   ist und in der das molare Verhältnis $OH^-/SiO_2$ zwischen 0,4 und 1,5 liegt, über einen Zeitraum, der ausreichend ist, um kristallines Material zu erzeugen, auf erhöhter Temperatur gehalten wird, gefolgt vom Abtrennen des erzeugten kristallinen Materials.

9. Verfahren nach Anspruch 7 oder 8, in dem die Formierungslösung auch eine oder mehrere Verbindung(en) der Formel $R_1R_2O$ enthält, in der $R_1$ und $R_2$ einen (substituierten) Kohlenwasserstoffbestandteil darstellen und eine der Gruppen $R_1$ und $R_2$ ein Wasserstoffatom darstellen kann, und in der das molare Verhältnis von $R_1R_2O$:$SiO_2$ nicht über 10 liegt.

10. Verfahren nach Anspruch 9, in dem eine Formierungslösung mit einem Verhältnis von $R_1R_2O$:$SiO_2$ von höchstens 2 verwendet wird.

11. Verfahren nach irgendeinem der Ansprüche 7 bis 10, in dem die Temperatur zwischen 75°C und 250°C, insbesondere zwischen 125°C und 225°C, gehalten wird.

12. Verfahren nach irgendeinem der Ansprüche 7 bis 11, in dem die Formierungslösung über einen Zeitraum zwischen 12 und 750 Stunden, insbesondere zwischen 24 und 500 Stunden, unter kristallbildenden Bedingungen gehalten wird.

13. Verfahren zur Herstellung von kristallinen Silikaten, wie in Ansprüchen 4 und 6 definiert, gemäß einem Verfahren nach einem oder mehreren der Ansprüche 7 bis 10, wobei das Formierungsgemisch in Bewegung gehalten wird.

14. Verwendung von Silikaten nach einem oder mehreren der Ansprüche 1 bis 6 als Molekularsiebe, welche Silikate einer Trocknungs- und/oder Kalzinierungsbehandlung unterworfen worden sein können.

15. Verwendung von Silikaten nach einem oder mehreren der Ansprüche 1 bis 6 als Katalysatorträger, welche Silikate einer Trocknungs- und/oder Kalzinierungsbehandlung unterworfen worden sein können.

## Revendications

1. Silicates à l'exception de la zéolite NU-1 ayant à l'état brut de synthèse la formule :

   $(M_{2/n}O)_p$:$(TMA_2O)_q$:$SiO_2$:$(Al_2O_3)_r$:$(H_2O)_s$

   dans laquelle M représente un métal alcalin ou alcalinoterreux de valence n et TMA représente un cation tétraméthylammonium et dans laquelle

$0 \leq p < 0{,}3$ ; $0{,}025 < q < 0{,}4$ ; $0 \leq r < 0{,}01$ et $0 \leq s < 4$.

2. Silicates selon la revendication 1, dans lesquels M représente un cation de métal alcalin et $p < 0{,}15$ ; $0{,}025 < q < 0{,}35$ ; $r < 0{,}01$ et $0{,}1 < s < 2$.

3. Silicates selon la revendication 2, dans lesquels $p < 0{,}1$ ; $0{,}04 < q < 0{,}3$ ; $r < 0{,}005$ et $0{,}3 < s < 1{,}75$.

4. Silicate ayant, à l'état brut de synthèse, la formule $(0{,}10\text{-}0{,}20)TMA_2O:SiO_2:(Al_2O_3)_r:(0{,}5\text{-}15)H_2O$ dans laquelle $r < 0{,}01$ et ayant un diagramme de diffraction des rayons X contenant au moins les lignes indiquées ci-dessous :

| Distance D (Å) | Intensité |
|---|---|
| 13,8 ± 0,2 | Très faible |
| 4,8 ± 0,1 | Moyenne |
| 3,8 ± 0,1 | Moyenne |
| 3,40 ± 0,05 | Moyenne |
| 2,70 ± 0,05 | Moyenne |

5. Silicate ayant, à l'état brut de synthèse, la formule $(0\text{-}0{,}1)Na_2O:(0{,}025\text{-}0{,}20)TMA_2O:SiO_2:(Al_2O_3)_r:(0{,}1\text{-}1{,}5)H_2O$ dans laquelle $r < 0{,}01$ et ayant un diagramme de diffraction des rayons X contenant au moins les lignes indiquées ci-dessous :

| Distance D (Å) | Intensité |
|---|---|
| 9,0 ± 0,1 | Moyenne |
| 8,3 ± 0,1 | Moyenne |
| 6,6 ± 0,1 | Moyenne |
| 6,3 ± 0,1 | Moyenne |
| 4,5 ± 0,1 | Moyenne |
| 4,3 ± 0,1 | Moyenne |
| 4,2 ± 0,1 | Moyenne |
| 4,0 ± 0,1 | Très faible |

6. Silicate ayant, à l'état brut de synthèse, la formule $(0\text{-}0{,}1)Na_2O:(0{,}05\text{-}0{,}25)TMA_2O:SiO_2:(Al_2O_3)_r:(0{,}3\text{-}1{,}5)H_2O$ dans laquelle $r < 0{,}01$ et ayant un diagramme de diffraction des rayons X contenant au moins les lignes indiquées ci-dessous :

| Distance D (Å) | Intensité |
|---|---|
| 11,3 ± 0,2 | Moyenne |
| 5,7 ± 0,1 | Très faible |
| 4,2 ± 0,1 | Moyenne |
| 3,8 ± 0,1 | Faible |
| 3,25 ± 0,05 | Moyenne |
| 3,10 ± 0,05 | Moyenne |
| 2,85 ± 0,05 | Moyenne |

7. Procédé de synthèse de silicates de la formule générale selon la revendication 1 à partir d'une solution de formation comprenant un mélange ayant la composition molaire $a(M_{2/n}O)\text{-}:bTMA_2O:SiO_2:cAl_2O_3:dH_2O$ où $0 \leq a < 0{,}5$ ; $0{,}05 < b < 10$ ; $0 \leq c < 0{,}01$ et $5 < d < 100$ et où le rapport molaire $OH^-/SiO_2$ est au moins 0,4, dans lequel on maintient le mélange à température élevée pendant un temps suffisant pour produire une matière cristalline et ensuite on sépare la matière cristalline produite.

**8.** Procédé selon la revendication 7, dans lequel on utilise un mélange ayant une composition molaire dans laquelle $0 \leq a < 0,25$ ; $0,1 < b < 2$ ; $0 \leq c < 0,005$ et $8 < d < 50$ et où le rapport molaire $OH^-/SiO_2$ est compris entre 0,4 et 1,5 qui est maintenu à température élevée pendant un temps suffisant pour produire une matière cristalline et ensuite on sépare la matière cristalline produite.

**9.** Procédé selon la revendication 7 ou 8, dans lequel la solution de formation contient aussi un ou plusieurs composés de la formule $R_1R_2O$ dans laquelle $R_1$ et $R_2$ représentent une portion hydrocarbyle éventuellement substituée et un de $R_1$ et $R_2$ peut représenter un atome d'hydrogène et le rapport molaire $R_1R_2O:SiO_2$ n'est pas au-dessus de 10.

**10.** Procédé selon la revendication 9, dans lequel on utilise une solution de formation ayant un rapport $R_1R_2O:SiO_2$ d'au maximum 2.

**11.** Procédé selon l'une quelconque des revendications 7-10, dans lequel la température est maintenue entre 75°C et 250°C, en particulier entre 125°C et 225°C.

**12.** Procédé selon l'une quelconque des revendications 7-11, dans lequel la solution de formation est maintenue pendant une période comprise entre 12 et 750 heures dans des conditions de formation de cristaux, en particulier entre 24 et 500 heures.

**13.** Procédé pour la préparation de silicates cristallins tels que définis dans les revendications 4 et 6 par un procédé selon une ou plusieurs des revendications 7-10 tandis qu'on applique une agitation au mélange de formation.

**14.** Utilisation de silicates selon une ou plusieurs des revendications 1-6, qui peuvent avoir été soumis à un traitement de séchage et/ou de calcination, comme tamis moléculaires.

**15.** Utilisation de silicates selon une ou plusieurs des revendications 1-6, qui peuvent avoir été soumis à un traitement de séchage et/ou de calcination, comme supports de catalyseurs.